(19)

Europäisches
Patentamt
European
Patent Office
Office européen
des brevets

(11) **EP 4 340 475 A1**

(12) **EUROPEAN PATENT APPLICATION**
published in accordance with Art. 153(4) EPC

(43) Date of publication:
**20.03.2024 Bulletin 2024/12**

(21) Application number: **22806324.4**

(22) Date of filing: **28.03.2022**

(51) International Patent Classification (IPC):
***H04W 64/00*** (2009.01)

(52) Cooperative Patent Classification (CPC):
**H04W 24/08; H04W 64/00**

(86) International application number:
**PCT/CN2022/083314**

(87) International publication number:
**WO 2022/237354 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2021 CN 202110513670**

(71) Applicant: **Datang Mobile Communications
Equipment Co., Ltd.
Beijing 100085 (CN)**

(72) Inventors:
• **FANG, Rongyi
  Beijing 100085 (CN)**

• **REN, Bin
  Beijing 100085 (CN)**
• **ZHANG, Zhenyu
  Beijing 100085 (CN)**
• **DA, Ren
  Beijing 100085 (CN)**
• **REN, Xiaotao
  Beijing 100085 (CN)**
• **LI, Gang
  Beijing 100085 (CN)**

(74) Representative: **Studio Torta S.p.A.
Viale Antonio Silvani, 6
40122 Bologna (IT)**

(54) **TERMINAL POSITIONING METHOD AND APPARATUS, RECEIVING END DEVICE, AND CORE
NETWORK DEVICE**

(57) A terminal positioning method, a terminal positioning device, a receiving end device and a core network device are provided, so as to solve the problem in the related art where the positioning accuracy of the terminal positioning method is low and it is impossible to meet the requirement on the positioning accuracy. The terminal positioning method includes: obtaining, by the receiving end device, first reference signal configuration information and a first reference signal corresponding to the first reference signal configuration information; obtaining, by the receiving end device, NLOS/LOS identification information and a measurement value; and transmitting, by the receiving end device, the NLOS/LOS identification information and the measurement value to the core network device, the measurement value and the NLOS/LOS identification information being used by the core network device to position a target terminal; or positioning, by the receiving end device, the target terminal in accordance with the NLOS/LOS identification information and the measurement value.

Fig.1

**Description**

**CROSS-REFERENCE TO RELATED APPLICATION**

This application claims a priority of the Chinese patent application No. 202110513670.3 filed in China on May 11, 2021, which is incorporated herein by reference in its entirety.

**TECHNICAL FIELD**

The present disclosure relates to the field of communication technology, in particular to a terminal positioning method, a terminal positioning device, a receiving end device and a core network device.

**BACKGROUND**

In a positioning system for wireless communication, the positioning performance critically depends on accuracy of a Time of Arrival (TOA) measurement value of a wireless signal.

The TOA measurement of the wireless signal is a commonly-used method for obtaining a distance between a transmitter and a receiver through measuring a propagation delay of a radio wave from the transmitter to the receiver. After obtaining TOA measurement values between a target User Equipment (UE) and a plurality of neighboring Transmit Receive Points (TRPs), a location of the UE is calculated through various location calculation algorithms in accordance with a known location of each TRP.

In a current terminal positioning method, it is impossible for a Location Management Function (LMF) entity to determine whether a delay measurement value provided by a terminal/gNB corresponds to a situation where links between the receiver and the transmitter include only a Non Line of Sight (NLOS) path rather than a Line of Sight (LOS) path, or a situation where the links include the LOS path but a Rice factor is very low, so the positioning accuracy is degraded seriously when the delay measurement values corresponding to these links are used, and it is impossible to meet the requirement on the positioning accuracy.

**SUMMARY**

An object of the present disclosure is to provide a terminal positioning method, a terminal positioning device, a receiving end device and a core network device, so as to solve the problem in the related art where the positioning accuracy of the terminal positioning method is low and it is impossible to meet the requirement on the positioning accuracy.

In one aspect, the present disclosure provides in some embodiments a terminal positioning method, including: obtaining, by a receiving end device, first reference signal configuration information and a first reference signal corresponding to the first reference signal configuration information; obtaining, by the receiving end device, NLOS/LOS identification information and a measurement value, the NLOS/LOS identification information being obtained in accordance with the first reference signal configuration information and the first reference signal; and transmitting, by the receiving end device, the NLOS/LOS identification information and the measurement value to a core network device, the measurement value and the NLOS/LOS identification information being used by the core network device to position a target terminal; or positioning, by the receiving end device, the target terminal in accordance with the NLOS/LOS identification information and the measurement value.

In a possible embodiment of the present disclosure, the NLOS/LOS identification information is used to represent a reliability level of a link between the receiving end device and a transmitting end device, or a reliability level of a measurement value corresponding to the link.

In a possible embodiment of the present disclosure, the obtaining, by the receiving end device, the NLOS/LOS identification information includes: obtaining a function value of a target metric parameter in accordance with the first reference signal configuration information and the first reference signal; and generating the NLOS/LOS identification information in accordance with the function value of the target metric parameter. The target metric parameter includes at least one of a time-domain metric parameter, a frequency-domain metric parameter, or a space-domain metric parameter.

In a possible embodiment of the present disclosure, the obtaining the function value of the time-domain metric parameter in accordance with the first reference signal configuration information and the first reference signal includes: obtaining a time-domain Channel Impulse Response (CIR) in accordance with the first reference signal configuration information and the first reference signal; obtaining a Rice factor of each symbol between different antennae of the receiving end device and the transmitting end device in accordance with the CIR; and performing first predetermined function operation on the Rice factor of each symbol between different antennae, to obtain a function value of a time-domain Rice factor.

In a possible embodiment of the present disclosure, the obtaining the function value of the frequency-domain metric parameter in accordance with the first reference signal configuration information and the first reference signal includes: obtaining a time-domain CIR and a Channel Frequency Response (CFR) in accordance with the first reference signal configuration information and the first reference signal; performing delay estimation in accordance with the first reference signal configuration information and the first reference signal, to obtain a delay estimated value; and processing the CIR in a first predetermined mode in accordance with the delay estimated value to obtain a first CIR, performing power normalization on the first CIR, performing time-frequency transformation on the normalized first CIR to obtain a variance between subcarriers in CFRs of the symbols between different antennae of the receiving end device and the transmitting end device, and performing second predetermined function operation on the variance to obtain a function value of a frequency-domain variance; or processing the CFR in a second predetermined mode in accordance with the delay estimated value to obtain a processed CFR, performing power normalization on the processed CFR to obtain a variance between subcarriers in CFRs of the symbols between different antennae of the receiving end device and the transmitting end device, and performing third predetermined function operation on the variance to obtain a function value of a frequency-domain variance.

In a possible embodiment of the present disclosure, the obtaining the function value of the space-domain metric parameter in accordance with the first reference signal configuration information and the first reference signal includes: obtaining CIRs or CFRs between different antennae of the receiving end device and the transmitting end device in accordance with the first reference signal configuration information and the first reference signal; and performing consistency calculation on the CIRs or CFRs between different antennae to obtain a space-domain consistency factor.

In a possible embodiment of the present disclosure, the generating the NLOS/LOS identification information in accordance with the function value of the target metric parameter includes: performing normalization on the function value of the target metric parameter to obtain a target value, the function value of the target metric parameter including a function value of a target metric parameter corresponding to each access network device or a function value of a target metric parameter corresponding to the measurement value; and performing fourth predetermined function operation in accordance with the target value, to generate the NLOS/LOS identification information.

In a possible embodiment of the present disclosure, the generating the NLOS/LOS identification information in accordance with the function value of the target metric parameter includes: in the case that the function value of the target metric parameter is greater than a predetermined threshold, determining that the corresponding NLOS/LOS identification information is 1, and in the case that the function value of the target metric parameter is smaller than or equal to the predetermined threshold, determining that the NLOS/LOS identification information corresponding to each access network device or the measurement value is 0; or ranking the function values of the target metric parameters in a predetermined order, setting the NLOS/LOS identification information corresponding to the measurement value or the access network device which meets a predetermined condition as 1, and setting the NLOS/LOS identification information corresponding to the measurement value or the access network device which does not meet the predetermined condition as 0.

In another aspect, the present disclosure provides in some embodiments a terminal positioning method, including: receiving, by a core network device, NLOS/LOS identification information and a measurement value transmitted by a receiving end device; and positioning, by the core network device, a target terminal in accordance with the NLOS/LOS identification information and the measurement value.

In a possible embodiment of the present disclosure, the NLOS/LOS identification information is used to represent a reliability level of a link between the receiving end device and a transmitting end device, or a reliability level of a measurement value corresponding to the link.

In a possible embodiment of the present disclosure, the positioning the target terminal in accordance with the NLOS/LOS identification information and the measurement value includes: determining, in accordance with the NLOS/LOS identification information, top N access network devices in a descending order of the measurement values, $N \geq 3$ and N being a positive integer; determining a measurement value corresponding to each access network device in the N access network devices; and creating a measurement formula in accordance with the measurement value corresponding to each access network device, assigning the NLOS/LOS identification information corresponding to each access network device as a weight value to the created measurement formula, and positioning the target terminal in accordance with the weighted measurement formula; or positioning the target terminal through a first predetermined positioning optimization algorithm in accordance with the measurement value corresponding to each access network device and the NLOS/LOS identification information corresponding to each access network device.

In a possible embodiment of the present disclosure, the positioning the target terminal in accordance with the NLOS/LOS identification information and the measurement value includes: determining measurement values corresponding to M access network devices whose NLOS/LOS identification information is 1, $M \geq 3$ and M being a positive integer; and creating a measurement formula in accordance with the measurement value corresponding to each access network device whose NLOS/LOS identification information is 1, and positioning the target terminal in accordance with the created measurement formula; or positioning the target terminal through a second predetermined positioning optimization algorithm in accordance with the measurement value corresponding to each access network device whose NLOS/LOS identification information is 1.

In yet another aspect, the present disclosure provides in some embodiments a receiving end device, including a memory, a transceiver and a processor. The memory is configured to store therein a computer program. The transceiver is configured to transmit and receive data under the control of the processor. The processor is configured to read the computer program in the memory so as to: obtain first reference signal configuration information and a first reference signal corresponding to the first reference signal configuration information; obtain NLOS/LOS identification information and a measurement value, the NLOS/LOS identification information being obtained in accordance with the first reference signal configuration information and the first reference signal; and transmit the NLOS/LOS identification information and the measurement value to a core network device, the measurement value and the NLOS/LOS identification information being used by the core network device to position a target terminal, or position the target terminal in accordance with the NLOS/LOS identification information and the measurement value.

In a possible embodiment of the present disclosure, the NLOS/LOS identification information is used to represent a reliability level of a link between the receiving end device and a transmitting end device, or a reliability level of a measurement value corresponding to the link.

In a possible embodiment of the present disclosure, the processor is configured to read the computer program in the memory to: obtain a function value of a target metric parameter in accordance with the first reference signal configuration information and the first reference signal; and generate the NLOS/LOS identification information in accordance with the function value of the target metric parameter. The target metric parameter includes at least one of a time-domain metric parameter, a frequency-domain metric parameter, or a space-domain metric parameter.

In a possible embodiment of the present disclosure, the processor is configured to read the computer program in the memory to: obtain a time-domain CIR in accordance with the first reference signal configuration information and the first reference signal; obtain a Rice factor of each symbol between different antennae of the receiving end device and the transmitting end device in accordance with the CIR; and perform first predetermined function operation on the Rice factor of each symbol between different antennae, to obtain a function value of a time-domain Rice factor.

In a possible embodiment of the present disclosure, the processor is configured to read the computer program in the memory to: obtain a time-domain CIR and a CFR in accordance with the first reference signal configuration information and the first reference signal; perform delay estimation in accordance with the first reference signal configuration information and the first reference signal, to obtain a delay estimated value; and process the CIR in a first predetermined mode in accordance with the delay estimated value to obtain a first CIR, performing power normalization on the first CIR, perform time-frequency transformation on the normalized first CIR to obtain a variance between subcarriers in CFRs of the symbols between different antennae of the receiving end device and the transmitting end device, and perform second predetermined function operation on the variance to obtain a function value of a frequency-domain variance; or process the CFR in a second predetermined mode in accordance with the delay estimated value to obtain a processed CFR, perform power normalization on the processed CFR to obtain a variance between subcarriers in CFRs of the symbols between different antennae of the receiving end device and the transmitting end device, and perform third predetermined function operation on the variance to obtain a function value of a frequency-domain variance.

In a possible embodiment of the present disclosure, the processor is configured to read the computer program in the memory to: obtain CIRs or CFRs between different antennae of the receiving end device and the transmitting end device in accordance with the first reference signal configuration information and the first reference signal; and perform consistency calculation on the CIRs or CFRs between different antennae to obtain a space-domain consistency factor.

In a possible embodiment of the present disclosure, the processor is configured to read the computer program in the memory to: perform normalization on the function value of the target metric parameter to obtain a target value, the function value of the target metric parameter including a function value of a target metric parameter corresponding to each access network device or a function value of a target metric parameter corresponding to the measurement value; and perform fourth predetermined function operation in accordance with the target value, to generate the NLOS/LOS identification information.

In a possible embodiment of the present disclosure, the processor is configured to read the computer program in the memory to: in the case that the function value of the target metric parameter is greater than a predetermined threshold, determine that the corresponding NLOS/LOS identification information is 1, and in the case that the function value of the target metric parameter is smaller than or equal to the predetermined threshold, determine that the NLOS/LOS identification information corresponding to each access network device or the measurement value is 0; or rank the function values of the target metric parameters in a predetermined order, set the NLOS/LOS identification information corresponding to the measurement value or the access network device which meets a predetermined condition as 1, and set the NLOS/LOS identification information corresponding to the measurement value or the access network device which does not meet the predetermined condition as 0.

In still yet another aspect, the present disclosure provides in some embodiments a terminal positioning device, including: a first obtaining unit configured to obtain first reference signal configuration information and a first reference signal corresponding to the first reference signal configuration information; a second obtaining unit configured to obtain NLOS/LOS identification information and a measurement value, the NLOS/LOS identification information being obtained in accordance with the first reference signal configuration information and the first reference signal; and a first transmission unit configured to transmit the NLOS/LOS identification information and the measurement value to a core network device, the measurement value and the NLOS/LOS identification information being used by the core network device to position a target terminal, or a first positioning unit configured to position the target terminal in accordance with the NLOS/LOS identification information and the measurement value.

In still yet another aspect, the present disclosure provides in some embodiments a computer-readable storage medium storing therein a computer program. The computer program is executed by a processor so as to implement the above-mentioned terminal positioning method.

In still yet another aspect, the present disclosure provides in some embodiments a core network device, including a memory, a transceiver and a processor. The memory is configured to store therein a computer program. The transceiver is configured to transmit and receive data under the control of the processor. The processor is configured to read the computer program in the memory so as to: receive through the transceiver NLOS/LOS identification information and a measurement value transmitted by a receiving end device; and position a target terminal in accordance with the NLOS/LOS identification information and the measurement value.

In a possible embodiment of the present disclosure, the NLOS/LOS identification information is used to represent a reliability level of a link between the receiving end device and a transmitting end device, or a reliability level of a measurement value corresponding to the link.

In a possible embodiment of the present disclosure, the processor is configured to read the computer program in the memory to: determine, in accordance with the NLOS/LOS identification information, top N access network devices in a descending order of the measurement values, $N \geq 3$ and N being a positive integer; determine a measurement value corresponding to each access network device in the N access network devices; and create a measurement formula in accordance with the measurement value corresponding to each access network device, assign the NLOS/LOS identification information corresponding to each access network device as a weight value to the created measurement formula, and position the target terminal in accordance with the weighted measurement formula; or position the target terminal through a first predetermined positioning optimization algorithm in accordance with the measurement value corresponding to each access network device and the NLOS/LOS identification information corresponding to each access network device.

In a possible embodiment of the present disclosure, the processor is configured to read the computer program in the memory to: determine measurement values corresponding to M access network devices whose NLOS/LOS identification information is 1, $M \geq 3$ and M being a positive integer; and create a measurement formula in accordance with the measurement value corresponding to each access network device whose NLOS/LOS identification information is 1, and position the target terminal in accordance with the created measurement formula; or position the target terminal through a second predetermined positioning optimization algorithm in accordance with the measurement value corresponding to each access network device whose NLOS/LOS identification information is 1.

In still yet another aspect, the present disclosure provides in some embodiments a terminal positioning device, including: a first reception unit configured to receive NLOS/LOS identification information and a measurement value transmitted by a receiving end device; and a second positioning unit configured to position a target terminal in accordance with the NLOS/LOS identification information and the measurement value.

In still yet another aspect, the present disclosure provides in some embodiments a processor-readable storage medium storing therein a computer program. The computer program is executed by a processor so as to implement the above-mentioned terminal positioning method.

The present disclosure at least has the following beneficial effects.

According to the embodiments of the present disclosure, the receiving end device obtains the first reference signal configuration information and the first reference signal corresponding to the first reference signal configuration information, obtains the NLOS/LOS identification information and the measurement value, and transmits the NLOS/LOS identification information and the measurement value to the core network device, so that the core network device positions the target terminal in accordance with the measurement value and the NLOS/LOS identification information, or positions the target terminal in accordance with the NLOS/LOS identification information and the measurement value. The NLOS/LOS identification information is obtained in accordance with the first reference signal configuration information and the first reference signal. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

## BRIEF DESCRIPTION OF THE DRAWINGS

Fig. 1 is a flow chart of a terminal positioning method according to an embodiment of the present disclosure;

Fig. 2 is another flow chart of the terminal positioning method according to an embodiment of the present disclosure;

Fig. 3 is a schematic view showing the generation of NLOS/LOS identification information on the basis of hard decision according to an embodiment of the present disclosure;

Fig. 4 is another schematic view showing the generation of the NLOS/LOS identification information on the basis of hard decision according to an embodiment of the present disclosure;

Fig. 5 is a block diagram of a receiving end device according to an embodiment of the present disclosure;

Fig. 6 is a schematic view showing the receiving end device according to an embodiment of the present disclosure;

Fig. 7 is a block diagram of a core network device according to an embodiment of the present disclosure; and

Fig. 8 is a schematic view showing the core network device according to an embodiment of the present disclosure.

## DETAILED DESCRIPTION

The expression "and/or" in the embodiments of the present disclosure may be merely used to describe the relationship between objects, and it may include three relationships. For example, "A and/or B" may represent that, there is only A, there are both A and B, and there is only B. Further, the symbol "j" usually refers to "or".

The expression "a plurality of" refers to two or more, and the other quantifiers are similar.

In the following, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

Under an ideal channel condition, there is only one shortest propagation path, i.e., an LOS path, between a transmitter and a receiver. However, in an actual wireless channel, there is a plurality of propagation paths between the transmitter and the receiver due to the reflection, refraction and diffraction of electromagnetic waves in the case of the ground and surrounding buildings, and this phenomenon is called as multi-path. When there is an obstacle between the transmitter and the receiver, There is no LOS path, i.e., an NLOS path, occurs therebetween.

In the case of the LOS path, a first-path (i.e., the LOS path) delay is used to accurately reflect a geometrical distance between the receiver and the transmitter. At this time, the delay estimation accuracy mainly depends on the performance of a Time Of Arrival (TOA) measurement algorithm. Commonly-used TOA measurement algorithms include a correlation-type algorithm, in which a cross-correlation operation is performed on a received signal and a transmitted signal to obtain a peak spectrum similar to a Power Delay Spectrum (PDP), and then a first peak thereof is taken as a delay estimated value, i.e., the first-path delay.

In the case of the LOS Path, when a Rice factor (i.e., a ratio of first-path power to a sum of power for each of the remaining paths) is very low, it is impossible to detect the LOS path through the TOA measurement algorithm, and an error occurs for a measurement value. In the case of no LOS path, i.e., in the case that there is merely the NLOS path, it is impossible for the first-path delay to accurately reflect the geometrical distance between the receiver and the transmitter, and the delay estimation accuracy dramatically decreases, so the final positioning calculation accuracy is deteriorated. In other words, in the case that there is merely the NLOS path or there is the LOS path but the Rice factor is very low, the positioning accuracy is deteriorated seriously when the delay measurement value is used for positioning, so it is impossible to meet the requirement on the positioning accuracy.

In order to solve the above-mentioned problem, the present disclosure provides a terminal positioning method and a terminal positioning device. The method and the device are provided on the basis of a same inventive concept, and a principle of the method for solving the problem is similar to that of the device, so the implementation of the device may refer to that of the method.

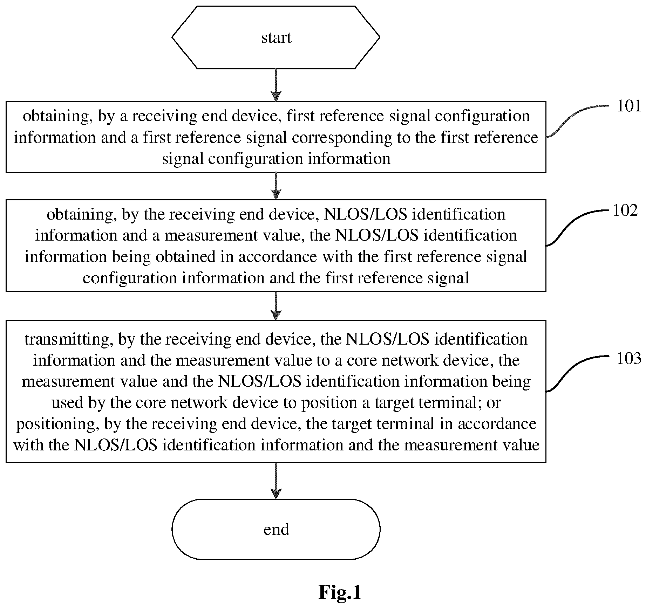

As shown in Fig. 1, the present disclosure provides in some embodiments a terminal positioning method for a receiving end device, which includes the following steps.

Step 101: obtaining, by the receiving end device, first reference signal configuration information and a first reference signal corresponding to the first reference signal configuration information.

It should be appreciated that, the receiving end device may be a terminal, e.g., a target terminal, or an access network device, e.g., a TRP.

Here, when the receiving end device is the target terminal, the first reference signal configuration information is Positioning Reference Signal (PRS) configuration information, and the first reference signal is a PRS. The PRS configuration information is forwarded by the TRP to the target terminal through a Location Management Function (LMF) entity, and the PRS is transmitted by the TRP to the target terminal.

When the receiving end device is an access network device, e.g., the TRP, the first reference signal configuration information is Sounding Reference Signal (SRS) configuration information, and the first reference signal is an SRS. The SRS configuration information is forwarded by the target terminal to the TRP through the LMF entity, and the SRS is transmitted by the target terminal to the TRP.

Step 102: obtaining, by the receiving end device, NLOS/LOS identification information and a measurement value, the NLOS/LOS identification information being obtained in accordance with the first reference signal configuration information and the first reference signal corresponding to the first reference signal configuration information.

It should be appreciated that, when the receiving end device is the target terminal, the transmitting end device is the access network device, and at this time, the method is used in a downlink positioning scenario. When the receiving end device is the access network device, the transmitting end device is the target terminal, and at this time, the method is used in an uplink positioning scenario.

Optionally, the measurement value includes a time measurement value, an angle measurement value or a phase measurement value.

The time measurement value includes a delay measurement value or a transmitting-receiving time difference between the receiving end device and the transmitting end device.

It should be appreciated that, when the measurement value is the delay measurement value between the receiving end device and the transmitting end device, the delay measurement value is obtained in accordance with the first reference signal configuration information and the first reference signal corresponding to the first reference signal configuration information.

Here, when the measurement vale is the transmitting-receiving time difference, the positioning scenario is a Round Trip Time (RTT) positioning scenario, and the transmitting-receiving time difference includes a first transmitting-receiving time difference and a second transmitting-receiving time difference. The first transmitting-receiving time difference is a difference between a receiving time of the PRS and a transmitting time of the SRS when the receiving end device is the target terminal, and the second transmitting-receiving time difference is a difference between a receiving time of the SRS and a transmitting time of the PRS when the receiving end device is the access network device.

Step 103: transmitting, by the receiving end device, the NLOS/LOS identification information and the measurement value to a core network device, the measurement value and the NLOS/LOS identification information being used by the core network device to position a target terminal; or positioning, by the receiving end device, the target terminal in accordance with the NLOS/LOS identification information and the measurement value.

In this step, the core network device refers to an LMF entity.

When the receiving end device is the access network device, or when the receiving end device is the target terminal and the target terminal is terminal_assisted, the NLOS/LOS identification information and the measurement value are transmitted to the core network device.

When the receiving end device is the target terminal and the target terminal is terminal_based, the target terminal positions itself in accordance with the NLOS/LOS identification information and the measurement value, i.e., the terminal performs the positioning calculation by itself.

According to the embodiments of the present disclosure, the receiving end device obtains the first reference signal configuration information and the first reference signal corresponding to the first reference signal configuration information, obtains the NLOS/LOS identification information and the measurement value, and transmits the NLOS/LOS identification information and the measurement value to the core network device so that the core network device positions the target terminal in accordance with the measurement value and the NLOS/LOS identification information, or positions the target terminal in accordance with the NLOS/LOS identification information and the measurement value. The NLOS/LOS identification information is obtained in accordance with the first reference signal configuration information and the first reference signal. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

Optionally, the NLOS/LOS identification information is used to represent a reliability level of a link between the receiving end device and a transmitting end device, or a reliability level of a measurement value corresponding to the link.

Optionally, Step 102 of obtaining, by the receiving end device, the NLOS/LOS identification information includes: obtaining a function value of a target metric parameter in accordance with the first reference signal configuration information and the first reference signal; and generating the NLOS/LOS identification information in accordance with the function value of the target metric parameter. The target metric parameter includes at least one of a time-domain metric parameter, a frequency-domain metric parameter, or a space-domain metric parameter.

It should be appreciated that, the target metric parameter is a parameter capable of reflecting the reliability level of the link between the receiving end device and a transmitting end device, or a reliability level of a measurement value corresponding to the link.

Here, the target metric parameter includes, but not limited to, at least one of the above-mentioned parameters.

The time-domain metric parameter may be a time-domain Rice factor, the frequency-domain metric parameter may be a frequency-domain variance, and the space-domain matrix parameter may be a space-domain consistency factor. It should be noted that, the target metric parameter may also include the other metric parameter, e.g., an overlap ratio, a peak shape value or a peak-to-average ratio.

Based on the above, in a possible embodiment of the present disclosure, the obtaining the function value of the time-domain metric parameter in accordance with the first reference signal configuration information and the first reference signal includes: obtaining a time-domain CIR in accordance with the first reference signal configuration information and the first reference signal; obtaining a Rice factor of each symbol between different antennae of the receiving end device and the transmitting end device in accordance with the CIR; and performing first predetermined function operation on the Rice factor of each symbol between different antennae, to obtain a function value of a time-domain Rice factor.

To be specific, when the receiving end device is the target terminal, the CIR is obtained in accordance with the PRS configuration information and the PRS, and when the receiving end device is the access network device, the CIR is obtained in accordance with the SRS configuration information and the SRS.

It should be appreciated that, the symbol between different antennae of the receiving end device and the transmitting end device refers to the symbol between the antenna of the receiving end device and the antenna of the transmitting end device. A correspondence between the antennae of the receiving end device and the antennae of the transmitting end device is not unique.

Here, optionally, the first predetermined function operation is an averaging operation or a weighted filtration operation. It should be noted that, the first predetermined function operation is not limited thereto, and it may include the other operations. In addition, if needed, linearization may be further performed.

In another possible embodiment of the present disclosure, the obtaining the function value of the frequency-domain metric parameter in accordance with the first reference signal configuration information and the first reference signal includes: performing delay estimation in accordance with the first reference signal configuration information and the first reference signal, to obtain a delay estimated value; and processing the CIR in a first predetermined mode in accordance with the delay estimated value to obtain a first CIR, performing power normalization on the first CIR, performing time-frequency transformation on the normalized first CIR to obtain a variance between subcarriers in Channel Frequency Responses (CFRs) of the symbols between different antennae of the receiving end device and the transmitting end device, and performing second predetermined function operation on the variance to obtain a function value of a frequency-domain variance; or processing the CFR in a second predetermined mode in accordance with the delay estimated value to obtain a processed CFR, performing power normalization on the processed CFR to obtain a variance between subcarriers in CFRs of the symbols between different antennae of the receiving end device and the transmitting end device, and performing third predetermined function operation on the variance to obtain a function value of a frequency-domain variance.

To be specific, when the receiving end device is the target terminal, the delay estimation is performed in accordance with the PRS configuration information and the PRS, and when the receiving end device is the access network device, the delay estimation is performed in accordance with the SRS configuration information and the SRS.

It should be appreciated that, multiple delay estimation algorithms are used for the delay estimation, e.g., a Multiple Signal Classification (MUSIC) algorithm, a correlation algorithm, and a Maximum Likelihood (ML) algorithm.

Here, the CIR is processed in the first predetermined mode so as to eliminate the influence caused by the delay estimated value in the CIR, thereby to ensure that a relative delay of a first path is 0. The first predetermined mode is cyclic shift. It should be noted that, the first predetermined mode is not limited thereto, and any other mode for eliminating the influence caused by the delay value may also be used, which will not be further particularly defined herein.

Here, in a possible embodiment of the present disclosure, the second predetermined function operation is an averaging operation or a weighted filtration operation. It should be noted that, the second predetermined function operation is not limited thereto, and it may include the other operation.

Here, the CFR is processed in the second predetermined mode so as to eliminate the influence caused by the delay estimated value in the CIR, thereby to ensure that a relative delay of a first path is 0. The second predetermined mode is frequency-domain compensation. It should be noted that, the second predetermined mode is not limited thereto, and any other mode for eliminating the influence caused by the delay value may also be used, which will not be further particularly defined herein.

Here, in a possible embodiment of the present disclosure, the third predetermined function operation is an averaging operation or a weighted filtration operation. It should be noted that, the third predetermined function operation is not limited thereto, and it may include the other operation.

In yet another possible embodiment of the present disclosure, the obtaining the function value of the space-domain metric parameter in accordance with the first reference signal configuration information and the first reference signal includes: obtaining CIRs or CFRs between different antennae of the receiving end device and the transmitting end device in accordance with the first reference signal configuration information and the first reference signal; and

performing consistency calculation on the CIRs or CFRs between different antennae to obtain a space-domain consistency factor.

It should be appreciated that, the above-mentioned three implementation modes for obtaining the target metric parameter in accordance with the first reference signal configuration information and the first reference signal are performed in such a situation where the target metric parameter is an individual metric parameter. It should be noted that, two or three of these implementation modes may be combined, so as to be applied to the situation where the target metric parameter includes two or three metric parameters.

The function value of the target metric parameter is obtained through the above-mentioned implementation modes, and the generation of the NLOS/LOS identification information in accordance with the function value of the target metric parameter is achieved as follows. In a possible embodiment of the present disclosure, the generating the NLOS/LOS identification information in accordance with the function value of the target metric parameter includes: performing normalization on the function value of the target metric parameter to obtain a target value, the function value of the target metric parameter including a function value of a target metric parameter corresponding to each access network device or a function value of a target metric parameter corresponding to the measurement value; and performing fourth predetermined function operation in accordance with the target value, to generate the NLOS/LOS identification information.

Here, the normalization is performed on the function value of the target metric parameter corresponding to each access network device, to obtain the target value. The function value of the target metric parameter corresponding to each access network device specifically refers to a function value of a target metric parameter corresponding to a link between each access network device, e.g., a TRP, and the target terminal.

When the receiving end device is the target terminal, the access network device is a non-reference access network device. When the measurement value is the delay measurement value between the receiving end device and the transmitting end device, the NLOS/LOS identification information is each absolute measurement value for a certain TRP, or each relative measurement difference between a non-reference TRP and a reference TRP, i.e., Time Difference of Arrival (TDOA).

When the receiving end device is the access network device and the measurement value is the delay measurement value between the receiving end device and the transmitting end device, the delay measurement value refers to an uplink TOA measurement value of each TRP, and the NLOS/LOS identification information is an absolute value obtained through measurement on each TRP.

Alternatively, normalization is performed on the function value of the target metric parameter corresponding to the measurement value, to obtain the target value.

Here, the function value of the target metric parameter corresponding to the measurement value specifically refers to a function value of a target metric parameter corresponding to each measurement value on a link between the access network device, e.g., the TRP, and the target terminal.

The performing the fourth predetermined function operation in accordance with the target value to generate the NLOS/LOS identification information specifically includes multiplying each target value with a corresponding weight coefficient to obtain the NLOS/LOS identification information.

It should be appreciated that, a value of the weight coefficient depends on an importance level of the metric parameter corresponding to the target value.

It should be appreciated that, when the target value is a value obtained through performing normalization on the function value of the target metric parameter corresponding to each access network device, the NLOS/LOS identification information is used to represent the reliability level of the link between the receiving end device and the transmitting end device.

When the target value is a value obtained through performing normalization on the function value of the target metric parameter corresponding to the measurement value, the NLOS/LOS identification information is used to represent the reliability level of the measurement value corresponding to the link between the receiving end device and the transmitting end device.

For example, when the target metric parameter includes the time-domain Rice factor, the frequency-domain variance and the space-domain consistency factor, the normalization is performed on the time-domain Rice factor, a reciprocal of the frequency-domain variance and the space-domain consistency factor corresponding to each access network device, to obtain $K_i$, $L_i$ and $S_i$, where i=1, ..., M-1, and M is the total quantity of access network devices.

Here, $K_i$, $L_i$ and $S_i$ are each a value between 0 and 1, $K_i$ is a value obtained through performing normalization on the time-domain Rice factor corresponding to an access network device i, $L_i$ is a value obtained through performing normalization on the reciprocal of the frequency-domain variance corresponding to the access network device i, and $S_i$ is a value obtained through performing normalization on the space-domain consistency factor corresponding to the access network device i.

Weight coefficients $a_i$, $b_i$ and $c_i$ are given in accordance with importance levels of the time-domain Rice factors, the frequency-domain variance and the space-domain consistency, to obtain the NLOS/LOS identification information

Indicator$_i$. To be specific, Indicator$_i$=a$_i$* K$_i$+ b$_i$* L$_i$+ c$_i$*S$_i$.

In another possible embodiment of the present disclosure, the generating the NLOS/LOS identification information in accordance with the function value of the target metric parameter includes: in the case that the function value of the target metric parameter is greater than a predetermined threshold, determining that the corresponding NLOS/LOS identification information is 1, and in the case that the function value of the target metric parameter is smaller than or equal to the predetermined threshold, determining that the NLOS/LOS identification information corresponding to each access network device or the measurement value is 0; or ranking the function values of the target metric parameters in a predetermined order, setting the NLOS/LOS identification information corresponding to the measurement value or the access network device which meets a predetermined condition as 1, and setting the NLOS/LOS identification information corresponding to the measurement value or the access network device which does not meet the predetermined condition as 0.

Here, normalization is performed on the function value of the target metric parameter, and then the function value is compared with the predetermined threshold.

For example, when the target metric parameter includes the time-domain Rice factor, the frequency-domain variance and the space-domain consistency factor, different thresholds are set for different metric parameters. For example, thresholds TH$_K$, TH$_L$ and THs are set for the normalized time-domain Rice factor K$_i$, the normalized reciprocal of the frequency-domain variance L$_i$ and the normalized space-domain consistency factor S$_i$, i.e.,

$$\text{Indicator}_i = \begin{cases} 1, \text{K}_i > \text{TH}_K \& \text{L}_i > \text{TH}_L \& \text{S}_i > \text{TH}_S \\ 0, \text{other} \end{cases}, i = 1 \ldots M - 1$$

.

The finally-obtained NLOS/LOS identification information Indicator$_i$ has a value of 1 or 0, where 0 indicates the NLOS and 1 indicates the LOS. Here, & means "and".

It should be appreciated that, the predetermined order is a descending order. Here, the predetermined condition includes whether the access network device or measurement value is ranked highly when the function values are ranked in the descending order. If yes, the corresponding NLOS/LOS identification information is set as 1; otherwise, the NLOS/LOS identification information is set as 0.

According to the terminal positioning device in the embodiments of the present disclosure, the receiving end device obtains the first reference signal configuration information and the first reference signal corresponding to the first reference signal configuration information, obtains the NLOS/LOS identification information and the measurement value, and transmits the NLOS/LOS identification information and the measurement value to the core network device so that the core network device positions the target terminal in accordance with the measurement value and the NLOS/LOS identification information, or positions the target terminal in accordance with the NLOS/LOS identification information and the measurement value. The NLOS/LOS identification information is obtained in accordance with the first reference signal configuration information and the first reference signal. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

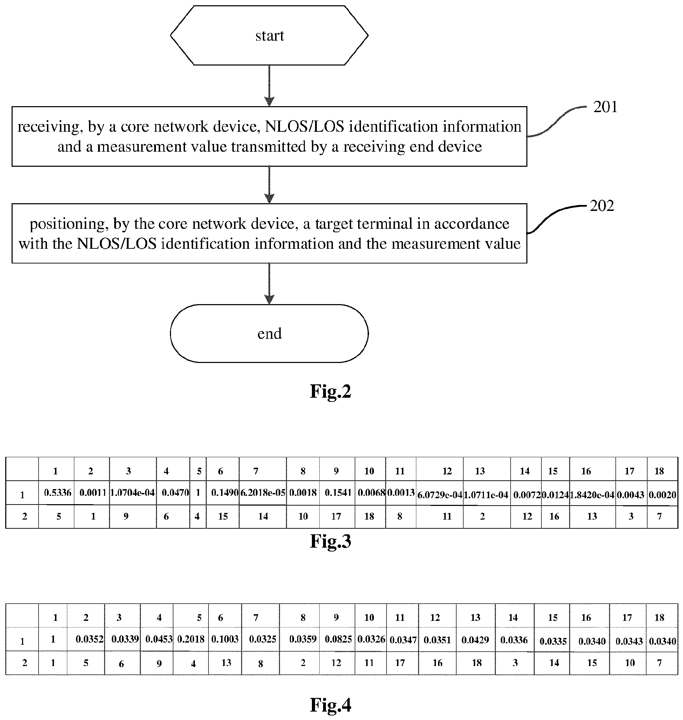

As shown in Fig. 2, the present disclosure provides in some embodiments a terminal positioning device for a core network device, which includes the following steps.

Step 201: receiving, by the core network device, NLOS/LOS identification information and a measurement value transmitted by a receiving end device.

It should be appreciated that, the receiving end device is a terminal, e.g., a target terminal, or an access network device, e.g., a TRP.

Optionally, the core network device is an LMF entity.

Optionally, the NLOS/LOS identification information is used to represent a reliability level of a link between the receiving end device and a transmitting end device, or a reliability level of a measurement value corresponding to the link.

It should be appreciated that, when the receiving end device is the target terminal, the transmitting end device is the access network device, and at this time, the method is used in a downlink positioning scenario. When the receiving end device is the access network device, the transmitting end device is the target terminal, and at this time, the method is used in an uplink positioning scenario.

Optionally, the measurement value includes a time measurement value, an angle measurement value or a phase measurement value.

The time measurement value includes a delay measurement value or a transmitting-receiving time difference between the receiving end device and the transmitting end device.

Here, when the measurement vale is the transmitting-receiving time difference, the positioning scenario is an uplink+downlink positioning scenario, and the transmitting-receiving time difference includes a first transmitting-receiving time difference and a second transmitting-receiving time difference. The first transmitting-receiving time difference is a difference between a receiving time of the PRS and a transmitting time of the SRS when the receiving end device is the target terminal, and the second transmitting-receiving time difference is a difference between a receiving time of the SRS and a transmitting time of the PRS when the receiving end device is the access network device.

Step 202: positioning, by the core network device, a target terminal in accordance with the NLOS/LOS identification information and the measurement value.

According to the terminal positioning method in the embodiments of the present disclosure, the core network device receives the NLOS/LOS identification information and the measurement value from the receiving end device, and positions the target terminal in accordance with the NLOS/LOS identification information and the measurement value. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

Optionally, Step 202 of positioning the target terminal in accordance with the NLOS/LOS identification information and the measurement value includes: determining, in accordance with the NLOS/LOS identification information, top N access network devices in a descending order of the measurement values, N≥3 and N being a positive integer; determining a measurement value corresponding to each access network device in the N access network devices; and creating a measurement formula in accordance with the measurement value corresponding to each access network device, assigning the NLOS/LOS identification information corresponding to each access network device as a weight value to the created measurement formula, and positioning the target terminal in accordance with the weighted measurement formula; or positioning the target terminal through a first predetermined positioning optimization algorithm in accordance with the measurement value corresponding to each access network device and the NLOS/LOS identification information corresponding to each access network device.

Here, when the NLOS/LOS identification information corresponds to the measurement value corresponding to the link between the receiving end device and the transmitting end device, a plurality of measurement values for each access network device is ranked in accordance with the NLOS/LOS identification information, and the measurement value with a maximum value corresponding to the NLOS/LOS identification information is selected. Then, the top N access network devices and the measurement values thereof are determined in accordance with the NLOS/LOS identification information in a descending order of the measurement values.

When the NLOS/LOS identification information represents the reliability level of the link between the receiving end device and the transmitting end device, the top N access network devices are determined in a descending order of the measurement values.

It should be appreciated that, when the NLOS/LOS identification information is used as a weight value for the formula created in accordance with the measurement value corresponding to each access network device, it is able to strength the effect of the reliable measurement value, and reduce the influence caused by the unreliable measurement value.

Here, the first predetermined positioning optimization algorithm is a minimum residual method, a Receiver Autonomous Integrity Monitoring (RAIM) algorithm or a Random Sample Consensus (RANSAC) algorithm. When the target terminal is positioned through the first predetermined positioning optimization algorithm, it is able to further improve the positioning accuracy.

In a possible embodiment of the present disclosure, Step 202 of positioning the target terminal in accordance with the NLOS/LOS identification information and the measurement value includes: determining measurement values corresponding to M access network devices whose NLOS/LOS identification information is 1, M≥3 and M being a positive integer; and creating a measurement formula in accordance with the measurement value corresponding to each access network device whose NLOS/LOS identification information is 1, and positioning the target terminal in accordance with the created measurement formula; or positioning the target terminal through a second predetermined positioning optimization algorithm in accordance with the measurement value corresponding to each access network device whose NLOS/LOS identification information is 1.

Here, the second predetermined positioning optimization algorithm may be a minimum residual method, an RAIM algorithm or an RANSAC algorithm. When the target terminal is positioned through the second predetermined positioning optimization algorithm, it is able to further improve the positioning accuracy.

Here, the measurement values each having a value of 1 is selected in accordance with the NLOS/LOS identification information, and these measurement values have a high reliability level. When the target terminal is positioned in accordance with these measurement values, it is able to improve the positioning accuracy.

According to the terminal positioning method in the embodiments of the present disclosure, the core network device receives the NLOS/LOS identification information and the measurement value from the receiving end device, and positions the target terminal in accordance with the NLOS/LOS identification information and the measurement value. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

The implementation of the terminal positioning method will be described hereinafter in conjunction with the embodiments.

First Embodiment: a downlink positioning scenario where the TOA measurement algorithm is an MUSIC algorithm

Here, in the downlink positioning scenario, the receiving end device is a UE and the transmitting end device is a TRP.

At a UE side

Step 1: receiving PRS configuration information from an LMF entity. It should be appreciated that, the TRP forwards the PRS configuration information to the UE through the LMF entity.

Step 2: receiving a downlink PRS, and obtaining a delay measurement value between the UE and the TRP and NLOS/LOS identification information in accordance with the PRS configuration information and the downlink PRS.

The obtaining the NLOS/LOS identification information in accordance with the PRS configuration information and the downlink PRS includes the following steps.

Step 2.1: obtaining a CIR in accordance with the PRS configuration information and the downlink PRS, obtaining an energy relationship among paths between the UE and the TRP in accordance with the CIR, and calculating an average value of Rice factors of the CIR for 4 antennae and 14 symbols.

Step 2.2: performing MUSCI delay estimation in accordance with the PRS configuration information and the downlink PRS, to obtain a delay estimated value.

Step 2.3: performing cyclic shift on the CIR in accordance with the delay estimated value, so as to eliminate the influence caused by the delay estimated value in the CIR.

Here, the cyclic shift is performed on the CIR, so as to eliminate the influence caused by the delay estimated value in the CIR, and ensure that a relative delay of a first path is 0.

Step 2.4: obtaining the CIR again, performing power normalization on the CIR, obtaining a CFR of each symbol between different antennae through time-frequency transformation, and calculating an average value of variances between carriers in the CFR for 4 antennae and 14 symbols.

Step 2.5: generating the NLOS/LOS identification information through soft decision in accordance with the average value of the Rice factors and a reciprocal of the average value of the variances. The soft decision includes performing normalization on the average value of the Rice factors of each non-reference TRP and the reciprocal of the average value of the variances.

To be specific, for each non-reference TRP, a maximum value of the average values of the Rice factors and a maximum value of the reciprocals of the average values of the variances are selected, and then the average value of the Rice factors and the reciprocal of the average value of the variance are each divided by the corresponding maximum value to obtain a value between 0 and 1, i.e., $K_i$ and $L_i$, where i=1, ..., 18. Weight coefficients $a_i$=0.3 and $b_i$=0.7 are given in accordance with importance levels of the time-domain Rice factor and the frequency-domain variance, to obtain the NLOS/LOS identification information Indicator$_i$.

To be specific, Indicator$_i$=$a_i$* $K_i$+ $b_i$* $L_i$=0.3* $K_i$+0.7* $L_i$.

Here, the reason for setting the weight coefficients as mentioned hereinabove lies in that, the frequency-domain variance determines whether the link is an LOS path or an NLOS path and it is more important than the Rice factor.

Step 3: transmitting the delay measurement value and the NLOS/LOS identification information to the LMF.

Here, the delay measurement value is TDOA, i.e., a difference between a TOA from the non-reference TRP to the UE and a TOA from the reference TRP to the UE. The NLOS/LOS identification information is an absolute value obtained through performing measurement on each TRP, or a relative difference between the non-reference TRP and the reference TRP.

At an LMF side

The PRS configuration information is transmitted to the UE, the delay measurement value and the NLOS/LOS identification information are received from the UE, and a position of the UE is calculated in accordance with the delay measurement value and the NLOS/LOS identification information.

To be specific, six TRP measurement values corresponding to a largest Indicator$_i$ are selected in accordance with the NLOS/LOS identification information Indicator$_i$ (i=1, ..., 18), and the Indicator$_i$ is taken as a weight value for creating a formula in accordance with the six TRP delay measurement values for the position calculation.

In this way, it is able to set a low weight value for a low-reliability measurement formula, thereby to reduce the influence caused by a measurement error and improve the positioning accuracy.

At a TRP side

The PRS configuration information is forwarded to the UE through the LMF, and the PRS is transmitted to the UE.

Second Embodiment: a downlink positioning scenario where the TOA measurement algorithm is an ML algorithm

Step 11: receiving PRS configuration information from an LMF entity. It should be appreciated that, the TRP forwards the PRS configuration information to the UE through the LMF entity.

Step 12: receiving a downlink PRS, and obtaining a delay measurement value between the UE and the TRP and NLOS/LOS identification information in accordance with the PRS configuration information and the downlink PRS.

The obtaining the NLOS/LOS identification information in accordance with the PRS configuration information and the downlink PRS includes the following steps.

Step 12.1: obtaining a CIR in accordance with the PRS configuration information and the downlink PRS, obtaining an energy relationship among paths between the UE and the TRP in accordance with the CIR, and calculating an average value of Rice factors of the CIR for 4 antennae and 14 symbols.

Step 12.2: performing ML delay estimation in accordance with the PRS configuration information and the downlink PRS, to obtain a delay estimated value.

Step 12.3: performing cyclic shift on the CIR in accordance with the delay estimated value, so as to eliminate the influence caused by the delay estimated value in the CIR.

Here, the cyclic shift is performed on the CIR, so as to eliminate the influence caused by the delay estimated value in the CIR, and ensure that a relative delay of a first path is 0.

Step 12.4: obtaining the CIR again, performing power normalization on the CIR, obtaining a CFR of each symbol between different antennae through time-frequency transformation, and calculating an average value of variances between carriers in the CFR for 4 antennae and 14 symbols.

Step 12.5: generating the NLOS/LOS identification information through hard decision in accordance with the average value of the Rice factors and a reciprocal of the average value of the variances. The hard decision will be described hereinafter.

A corresponding decision threshold is set for each estimation index. For example, for the normalized Rice factor

$$\text{Indicator}_i = \begin{cases} 1, K_i > 0.5 \& L_i > 0.8 \\ 0, \text{other} \end{cases}, i = 1...18$$

$K_i$ and the reciprocal $L_i$ of the variance, $TH_K$=5 and $TH_L$=0.8, i.e., . The finally-obtained NLOS/LOS identification information $\text{Indicator}_i$ has a value of 0 or 1, where 0 indicates NLOS and 1 indicates LOS.

Apart from the above formula, the normalized Rice factors $K_i$ are ranked in a descending order, and so do the normalized reciprocals $L_i$ of the variances, and the normalized consistency factors $S_i$. Then, N links are appropriately selected in the three sequences, and the NLOS/LOS identification information corresponding thereto is set as 1.

Step 13: transmitting the delay measurement value and the NLOS/LOS identification information to the LMF.

Here, the delay measurement value may be TDOA, i.e., a difference between a TOA from the non-reference TRP to the UE and a TOA from the reference TRP to the UE. The NLOS/LOS identification information may be an absolute value obtained through performing measurement on each TRP, or a relative difference between the non-reference TRP and the reference TRP.

At an LMF side

The PRS configuration information is transmitted to the UE, the delay measurement value and the NLOS/LOS identification information are received from the UE, and a position of the UE is calculated in accordance with the delay measurement value and the NLOS/LOS identification information.

To be specific, merely the TRP measurement values corresponding to the NLOS/LOS identification information $\text{Indicator}_i$ having a value of 1 are selected for the RANSC positioning. When there are many LOS Paths, the measurement values selected in accordance with the NLOS/LOS identification information have a high reliability level, so it is able to improve the positioning accuracy.

At a TRP side

The PRS configuration information is forwarded to the UE through the LMF, and the PRS is transmitted to the UE.

Third Embodiment: an uplink positioning scenario where the TOA measurement algorithm is an oversampling correlation algorithm

Here, in the uplink positioning scenario, the receiving end device is a TRP and the transmitting end device is a UE.

At a TRP side

Step 21: receiving SRS configuration information from an LMF entity. It should be appreciated that, the UE forwards the SRS configuration information to the TRP through the LMF entity.

Step 22: receiving an uplink SRS, and obtaining a delay measurement value between the UE and the TRP and NLOS/LOS identification information in accordance with the SRS configuration information and the uplink SRS.

The obtaining the delay measurement value between the UE and the TRP and NLOS/LOS identification information in accordance with the SRS configuration information and the uplink SRS includes the following steps.

Step 22.1: obtaining a CIR in accordance with the SRS configuration information and the uplink SRS, obtaining an energy relationship among paths between the UE and the TRP in accordance with the CIR, and calculating an average value of Rice factors of the CIR for 4 antennae and 14 symbols.

Step 22.2: performing oversampling correlation delay estimation in accordance with the SRS configuration information and the uplink SRS, to obtain a delay estimated value.

Step 22.3: performing frequency-domain compensation on the CFR in accordance with the delay estimated value, so as to eliminate the influence caused by the delay estimated value in the CFR.

Here, the frequency-domain compensation is performed on the CFR, so as to eliminate the influence caused by the delay estimated value in the SRS, and ensure that a relative delay of a first path is 0.

Step 22.4: obtaining the CIR again, performing power normalization on the CIR, obtaining a CFR of each symbol between different antennae through time-frequency transformation, and calculating an average value of variances between carriers in the CFR for 4 antennae and 14 symbols.

Step 22.5: generating the NLOS/LOS identification information through soft decision in accordance with the average value of the Rice factors, a reciprocal of the average value of the variances and the space-domain consistency factor. The soft decision includes performing normalization on the average value of the Rice factors of each non-reference TRP, the reciprocal of the average value of the variances and the space-domain consistency factor.

To be specific, for each non-reference TRP, a maximum value of the average values of the Rice factors, a maximum value of the reciprocals of the average values of the variances and a maximum value of the space-domain consistency factors are selected, and then the average value of the Rice factors, the reciprocal of the average value of the variance and the space-domain consistency factor are each divided by the corresponding maximum value to obtain a value between 0 and 1, i.e., $K_i$, $L_i$ and $S_i$, where i=1, ..., 18. Weight coefficients $a_i$=0.3, $b_i$=0.6 and $c_i$=0.1 are given in accordance with importance levels of the time-domain Rice factor, the frequency-domain variance and the time-domain consistency factor, to obtain the NLOS/LOS identification information $Indicator_i$.

To be specific, $Indicator_i = a_i * K_i + b_i * L_i + c_i * S_i = 0.3 * K_i + 0.6 * L_i + 0.1 * S_i$.

Here, the reason for setting the weight coefficients as mentioned hereinabove lies in that, the frequency-domain variance determines whether the link is an LOS path or an NLOS path and it is more important than the Rice factor, and the space-domain consistency factor plays a smaller role in the decision.

Step 23: transmitting the delay measurement value and the NLOS/LOS identification information to the LMF.

Here, the uplink TOA measurement value refers to an uplink TOA measurement value for each TRP, and the NLOS/LOS identification information is an absolute value obtained through performing measurement on each TRP.

At an LMF side
The SRS configuration information is transmitted to the TRP, the delay measurement value and the NLOS/LOS identification information are received from the TRP, and a position of the UE is calculated in accordance with the delay measurement value and the NLOS/LOS identification information.

To be specific, six TRP measurement values corresponding to a largest $Indicator_i$ are selected in accordance with the NLOS/LOS identification information $Indicator_i$ (i=1, ..., 18), and the $Indicator_i$ is taken as a weight value for creating a formula in accordance with the six TRP delay measurement values for the position calculation.

In this way, it is able to set a low weight value for a low-reliability measurement formula, thereby to reduce the influence caused by a measurement error and improve the positioning accuracy.

At a UE side
The SRS configuration information is forwarded to the TRP through the LMF, and the SRS is transmitted to the TRP.

Fourth Embodiment: an RRT scenario

At a UE side
Step 31: receiving PRS configuration information from an LMF entity. It should be appreciated that, the TRP forwards the PRS configuration information to the UE through the LMF entity.

Step 32: receiving a downlink PRS, and obtaining a PRS receiving time and NLOS/LOS identification information.

The obtaining the NLOS/LOS identification information includes the following steps.

Step 32.1: obtaining a CIR in accordance with the PRS configuration information and the downlink PRS, obtaining an energy relationship among paths between the UE and the TRP in accordance with the CIR, and calculating an average value of Rice factors of the CIR for 4 antennae and 14 symbols.

Step 32.2: performing correlation delay estimation in accordance with the PRS configuration information and the downlink PRS, to obtain a delay estimated value.

Step 32.3: performing cyclic shift on the CIR in accordance with the delay estimated value, so as to eliminate the influence caused by the delay estimated value in the CIR.

Here, the cyclic shift is performed on the CIR, so as to eliminate the influence caused by the delay estimated value in the CIR, and ensure that a relative delay of a first path is 0.

Step 32.4: obtaining the CIR again, performing power normalization on the CIR, obtaining a CFR of each symbol between different antennae through time-frequency transformation, and calculating an average value of variances between subcarriers in the CFR for 4 antennae and 14 symbols.

Step 32.5: generating the NLOS/LOS identification information through hard decision in accordance with the average value of the Rice factors and a reciprocal of the average value of the variances.

For example, the normalized Rice factors $K_i$ are ranked in a descending order, and so do the normalized reciprocals $L_i$ of the variances, as shown in Figs. 3 and 4. Here, there are 18 TRPs.

In Figs. 3 and 4, the numerals in a first row represent index numbers of the TRPs.

In Fig. 3, a second row represents the normalized Rice factors corresponding to the TRPs, a third row represents the index numbers of the TRPs after the normalized Rice factors $K_i$ are ranked in a descending order. For example, "5" is located at the first place in the third row, and it means that the normalized Rice factor $K_i$ corresponding to TRP5 has a maximum value.

In Fig. 4, a second row represents the normalized reciprocals $L_i$ of the variances corresponding to the TRPs, and a third row represents the index numbers of the TRPs after the normalized reciprocals are ranked in a descending order.

Then, first five links are selected in the two sequences, i.e., TRP1, TRP5, TRP4, TRP6 and TRP9, the NLOS/LOS identification information of these five TRPs is set as 1, and the NLOS/LOS identification information of the remaining TRPs is set as 0.

Step 33: forwarding SRS configuration information to the TRP through the LMF.

Step 34: transmitting an uplink SRS to the TRP. Here, a transmitting time of the SRS is obtained, to obtain a transmitting-receiving time difference.

Step 35: calculating a UE transmitting-receiving time difference, and transmitting the UE transmitting-receiving time difference and the NLOS/LOS identification information to the LMF entity.

Here, the NLOS/LOS identification information may be an absolute value obtained through performing measurement on each TRP, or a relative difference between a non-reference TRP and a reference TRP.

At a TRP side

Step 41: forwarding the PRS configuration information to the UE through the LMF entity.

Step 42: transmitting the downlink PRS to the UE. In this step, the transmitting time of the PRS is obtained.

Step 43: receiving the SRS configuration information from the LMF entity. It should be appreciated that, the UE forwards the SRS configuration information to the TRP through the LMF entity.

Step 44: receiving the uplink SRS, to obtain the receiving time of the SRS and the NLOS/LOS identification information.

The obtaining the NLOS/LOS identification information includes the following steps.

Step 44.1: obtaining a CIR in accordance with the SRS configuration information and the uplink SRS, obtaining an energy relationship among paths between the UE and the TRP in accordance with the CIR, and calculating an average value of Rice factors of the CIR for 4 antennae and 14 symbols.

Step 44.2: performing correlation delay estimation in accordance with the SRS configuration information and the uplink SRS, to obtain a delay estimated value.

Step 44.3: performing frequency-domain compensation on the CFR in accordance with the delay estimated value, so as to eliminate the influence caused by the delay estimated value in the CFR.

Here, the frequency-domain compensation is performed on the CFR, so as to eliminate the influence caused by the delay estimated value in the CFR, and ensure that a relative delay of a first path is 0.

Step 44.4: obtaining the CFR again, performing power normalization on the CFR, and calculating an average value of variances between carriers in the CFR for 4 antennae and 14 symbols.

Step 44.5: generating the NLOS/LOS identification information through hard decision in accordance with the average value of the Rice factors and a reciprocal of the average value of the variances.

For example, the normalized Rice factors $K_i$ are ranked in a descending order, and so do the normalized reciprocals $L_i$ of the variances, like the process at the UE side.

TRP1, TRP5, TRP6, TRP9 and TRP13 are selected, the NLOS/LOS identification information of these five TRPs is set as 1, and the NLOS/LOS identification information of the remaining TRPs is set as 0.

Step 45: calculating a TRP transmitting-receiving time difference, and transmitting the TRP transmitting-receiving time difference and the NLOS/LOS identification information to the LMF entity.

At an LMF side

The PRS configuration information and the SRS configuration information transmitted to the UE and the TRP, respectively. The UE transmitting-receiving time difference, the TRP transmitting-receiving time difference and the NLOS/LOS identification information are received from the UE and the TRP, and a position of the UE is calculated in accordance with the UE transmitting-receiving time difference, the TRP transmitting-receiving time difference and the NLOS/LOS identification information.

To be specific, merely the TRP measurement values corresponding to the NLOS/LOS identification information $Indicator_i$ having a value of 1 are selected for the positioning, i.e., TRP1, TRP5, TRP6 and TRP9, or all the TRPs corresponding to $Indicator_i$ having a value of 1 are directly used to calculate the position through the RANSAC algorithm.

When there are many LOS paths, the measurement values selected in accordance with the NLOS/LOS identification information have a high reliability level, so it is able to improve the positioning accuracy.

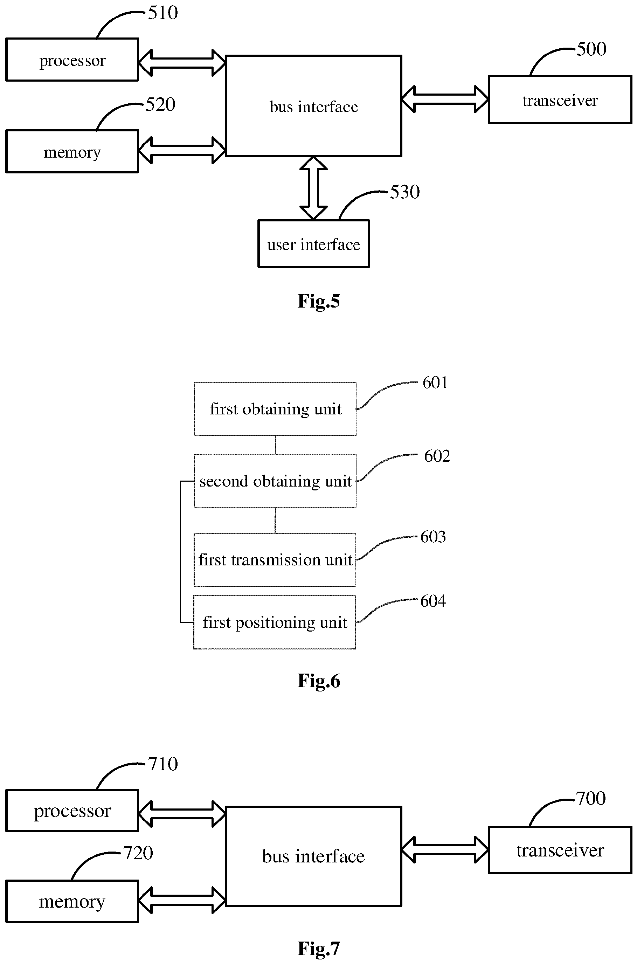

As shown in Fig. 5, the present disclosure further provides in some embodiments a receiving end device, which includes a memory 520, a transceiver 500 and a processor 510. The memory 520 is configured to store therein a computer program. The transceiver 500 is configured to transmit and receive data under the control of the processor 510. The processor 510 is configured to read the computer program in the memory 520 so as to: obtain first reference signal configuration information and a first reference signal corresponding to the first reference signal configuration information; obtain NLOS/LOS identification information and a measurement value, the NLOS/LOS identification information being obtained in accordance with the first reference signal configuration information and the first reference signal; and transmit through the transceiver 500 the NLOS/LOS identification information and the measurement value to a core network device, the measurement value and the NLOS/LOS identification information being used by the core network device to position a target UE, or position the target UE in accordance with the NLOS/LOS identification information and the measurement value.

In the case that the receiving end device is the target terminal, as shown in Fig. 5, bus architecture may include a number of buses and bridges connected to each other, so as to connect various circuits for one or more processors 510 and one or more memories 520. In addition, as is known in the art, the bus architecture may be used to connect any other circuits, such as a circuit for a peripheral device, a circuit for a voltage stabilizer and a power management circuit. A bus interface may be provided, and the transceiver 500 may consist of a plurality of elements, i.e., a transmitter and a receiver for communication with any other devices over a transmission medium. The transmission medium includes a wireless channel, a wired channel, or an optical cable. With respect to different terminals, a user interface 530 may also be provided for devices which are to be arranged inside or outside the terminal, and these devices may include but not limited to a keypad, a display, a speaker, a microphone and a joystick.

The processor 510 may take charge of managing the bus architecture as well as general processings. The memory 520 may store therein data for the operation of the processor 510.

Optionally, the processor 510 may be a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor 510 is configured to call the computer program in the memory, so as to implement the above-mentioned method in accordance with obtained executable instructions. The processor 510 may also be physically separated from the memory 520.

In the case that the receiving end device is the access network device, the user interface 530 in Fig. 5 may be removed.

Optionally, the NLOS/LOS identification information is used to represent a reliability level of a link between the receiving end device and a transmitting end device, or a reliability level of a measurement value corresponding to the link.

Optionally, the processor 510 is configured to read the computer program in the memory so as to: obtain a function value of a target metric parameter in accordance with the first reference signal configuration information and the first reference signal; and generate the NLOS/LOS identification information in accordance with the function value of the target metric parameter. The target metric parameter includes at least one of a time-domain metric parameter, a frequency-domain metric parameter, or a space-domain metric parameter.

Optionally, the processor 510 is configured to read the computer program in the memory so as to: obtain a time-domain CIR in accordance with the first reference signal configuration information and the first reference signal; obtain a Rice factor of each symbol between different antennae of the receiving end device and the transmitting end device in accordance with the CIR; and perform first predetermined function operation on the Rice factor of each symbol between different antennae, to obtain a function value of a time-domain Rice factor.

Optionally, the processor 510 is configured to read the computer program in the memory so as to: perform delay estimation in accordance with the first reference signal configuration information and the first reference signal, to obtain a delay estimated value; and process the CIR in a first predetermined mode in accordance with the delay estimated value to obtain a first CIR, performing power normalization on the first CIR, perform time-frequency transformation on the normalized first CIR to obtain a variance between subcarriers in CFRs of the symbols between different antennae of the receiving end device and the transmitting end device, and perform second predetermined function operation on the variance to obtain a function value of a frequency-domain variance; or process the CFR in a second predetermined mode in accordance with the delay estimated value to obtain a processed CFR, perform power normalization on the processed CFR to obtain a variance between subcarriers in CFRs of the symbols between different antennae of the receiving end device and the transmitting end device, and perform third predetermined function operation on the variance to obtain a function value of a frequency-domain variance.

Optionally, the processor 510 is configured to read the computer program in the memory so as to: obtain CIRs or CFRs between different antennae of the receiving end device and the transmitting end device in accordance with the first reference signal configuration information and the first reference signal; and perform consistency calculation on the CIRs or CFRs between different antennae to obtain a space-domain consistency factor.

Optionally, the processor 510 is configured to read the computer program in the memory so as to: perform normalization on the function value of the target metric parameter to obtain a target value, the function value of the target metric parameter including a function value of a target metric parameter corresponding to each access network device or a function value of a target metric parameter corresponding to the measurement value; and perform fourth predetermined function operation in accordance with the target value, to generate the NLOS/LOS identification information.

Optionally, the processor 510 is configured to read the computer program in the memory so as to: in the case that the function value of the target metric parameter is greater than a predetermined threshold, determine that the corresponding NLOS/LOS identification information is 1, and in the case that the function value of the target metric parameter is smaller than or equal to the predetermined threshold, determine that the NLOS/LOS identification information corresponding to each access network device or the measurement value is 0; or rank the function values of the target metric parameters in a predetermined order, set the NLOS/LOS identification information corresponding to the measurement value or the access network device which meets a predetermined condition as 1, and set the NLOS/LOS identification information corresponding to the measurement value or the access network device which does not meet the predetermined condition as 0.

According to the embodiments of the present disclosure, the receiving end device is configured to: obtain first reference signal configuration information and a first reference signal corresponding to the first reference signal configuration information; obtain NLOS/LOS identification information and a measurement value, the NLOS/LOS identification information being obtained in accordance with the first reference signal configuration information and the first reference signal; and transmit the NLOS/LOS identification information and the measurement value to a core network device, the measurement value and the NLOS/LOS identification information being used by the core network device to position a target terminal, or position the target terminal in accordance with the NLOS/LOS identification information and the measurement value. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

As shown in Fig. 6, the present disclosure further provides in some embodiments a terminal positioning device, which includes: a first obtaining unit 601 configured to obtain first reference signal configuration information and a first reference signal corresponding to the first reference signal configuration information; a second obtaining unit 602 configured to obtain NLOS/LOS identification information and a measurement value, the NLOS/LOS identification information being obtained in accordance with the first reference signal configuration information and the first reference signal; and a first transmission unit 603 configured to transmit the NLOS/LOS identification information and the measurement value to a core network device, the measurement value and the NLOS/LOS identification information being used by the core network device to position a target terminal, or a first positioning unit 604 configured to position the target terminal in accordance with the NLOS/LOS identification information and the measurement value.

Optionally, the NLOS/LOS identification information is used to represent a reliability level of a link between the receiving end device and a transmitting end device, or a reliability level of a measurement value corresponding to the link.

Optionally, the second obtaining unit 602 is specifically configured to: obtain a function value of a target metric parameter in accordance with the first reference signal configuration information and the first reference signal; and generate the NLOS/LOS identification information in accordance with the function value of the target metric parameter. The target metric parameter includes at least one of a time-domain metric parameter, a frequency-domain metric parameter, or a space-domain metric parameter.

Optionally, the second obtaining unit 602 is specifically configured to: obtain a time-domain CIR in accordance with the first reference signal configuration information and the first reference signal; obtain a Rice factor of each symbol between different antennae of the receiving end device and the transmitting end device in accordance with the CIR; and perform first predetermined function operation on the Rice factor of each symbol between different antennae, to obtain a function value of a time-domain Rice factor.

Optionally, the second obtaining unit 602 is specifically configured to: perform delay estimation in accordance with the first reference signal configuration information and the first reference signal, to obtain a delay estimated value; and process the CIR in a first predetermined mode in accordance with the delay estimated value to obtain a first CIR, performing power normalization on the first CIR, perform time-frequency transformation on the normalized first CIR to obtain a variance between subcarriers in CFRs of the symbols between different antennae of the receiving end device and the transmitting end device, and perform second predetermined function operation on the variance to obtain a function value of a frequency-domain variance; or process the CFR in a second predetermined mode in accordance with the delay estimated value to obtain a processed CFR, perform power normalization on the processed CFR to obtain a variance between subcarriers in CFRs of the symbols between different antennae of the receiving end device and the transmitting end device, and perform third predetermined function operation on the variance to obtain a function value of a frequency-domain variance.

Optionally, the second obtaining unit 602 is specifically configured to: obtain CIRs or CFRs between different antennae of the receiving end device and the transmitting end device in accordance with the first reference signal configuration information and the first reference signal; and perform consistency calculation on the CIRs or CFRs between different antennae to obtain a space-domain consistency factor.

Optionally, the second obtaining unit 602 is specifically configured to: perform normalization on the function value of the target metric parameter to obtain a target value, the function value of the target metric parameter including a function value of a target metric parameter corresponding to each access network device or a function value of a target metric parameter corresponding to the measurement value; and perform fourth predetermined function operation in accordance with the target value, to generate the NLOS/LOS identification information.

Optionally, the second obtaining unit 602 is specifically configured to: in the case that the function value of the target metric parameter is greater than a predetermined threshold, determine that the corresponding NLOS/LOS identification information is 1, and in the case that the function value of the target metric parameter is smaller than or equal to the predetermined threshold, determine that the NLOS/LOS identification information corresponding to each access network device or the measurement value is 0; or rank the function values of the target metric parameters in a predetermined order, set the NLOS/LOS identification information corresponding to the measurement value or the access network device which meets a predetermined condition as 1, and set the NLOS/LOS identification information corresponding to the measurement value or the access network device which does not meet the predetermined condition as 0.

According to the embodiments of the present disclosure, the terminal positioning device is configured to: obtain first reference signal configuration information and a first reference signal corresponding to the first reference signal configuration information; obtain NLOS/LOS identification information and a measurement value, the NLOS/LOS identification information being obtained in accordance with the first reference signal configuration information and the first reference signal; and transmit the NLOS/LOS identification information and the measurement value to a core network device, the measurement value and the NLOS/LOS identification information being used by the core network device to position a target terminal, or position the target terminal in accordance with the NLOS/LOS identification information and the measurement value. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, the device in the embodiments of the present disclosure is used to implement the above-mentioned method with a same technical effect, which will not be further particularly defined herein.

The present disclosure further provides in some embodiments a processor-readable storage medium storing therein a program instruction. The program instruction is executed by a processor so as to: obtain first reference signal configuration information and a first reference signal corresponding to the first reference signal configuration information; obtain NLOS/LOS identification information and a measurement value, the NLOS/LOS identification information being obtained in accordance with the first reference signal configuration information and the first reference signal; and transmit the NLOS/LOS identification information and the measurement value to a core network device, the measurement value and the NLOS/LOS identification information being used by the core network device to position a target terminal, or position the target terminal in accordance with the NLOS/LOS identification information and the measurement value.

The program instruction is executed by the processor so as to implement the above-mentioned method for the receiving end device in Fig. 1, which will not be further particularly defined herein.

As shown in Fig. 7, the present disclosure further provides in some embodiments a core network device, which includes a memory 720, a transceiver 700 and a processor 710. The memory 720 is configured to store therein a computer program. The transceiver 700 is configured to transmit and receive data under the control of the processor 710. The processor 700 is configured to read the computer program in the memory 720 so as to: receive through the transceiver 700 NLOS/LOS identification information and a measurement value transmitted by a receiving end device; and position a target terminal in accordance with the NLOS/LOS identification information and the measurement value.

In Fig. 7, bus architecture may include a number of buses and bridges connected to each other, so as to connect various circuits for one or more processors 710 and one or more memories 720. In addition, as is known in the art, the bus architecture may be used to connect any other circuits, such as a circuit for a peripheral device, a circuit for a voltage stabilizer and a power management circuit. A bus interface may be provided, and the transceiver 700 may consist of a plurality of elements, i.e., a transmitter and a receiver for communication with any other devices over a transmission medium. The transmission medium includes a wireless channel, a wired channel, or an optical cable. The processor 710 may take charge of managing the bus architecture as well as general processings. The memory 720 may store therein data for the operation of the processor 710.

The processor 710 may be a CPU, an ASIC, an FPGA or a CPLD. The processor may also use multi-core architecture.

Optionally, the NLOS/LOS identification information is used to represent a reliability level of a link between the receiving end device and a transmitting end device, or a reliability level of a measurement value corresponding to the link.

Optionally, the processor 710 is configured to read the computer program in the memory to: determine, in accordance with the NLOS/LOS identification information, top N access network devices in a descending order of the measurement values, N≥3 and N being a positive integer; determine a measurement value corresponding to each access network device in the N access network devices; and create a measurement formula in accordance with the measurement value corresponding to each access network device, assign the NLOS/LOS identification information corresponding to each access network device as a weight value to the created measurement formula, and position the target terminal in accordance with the weighted measurement formula; or position the target terminal through a first predetermined positioning optimization algorithm in accordance with the measurement value corresponding to each access network device and the NLOS/LOS identification information corresponding to each access network device.

Optionally, the processor 710 is configured to read the computer program in the memory to: determine measurement values corresponding to M access network devices whose NLOS/LOS identification information is 1, M≥3 and M being a positive integer; and create a measurement formula in accordance with the measurement value corresponding to each access network device whose NLOS/LOS identification information is 1, and position the target terminal in accordance with the created measurement formula; or position the target terminal through a second predetermined positioning optimization algorithm in accordance with the measurement value corresponding to each access network device whose NLOS/LOS identification information is 1.

According to the embodiments of the present disclosure, the core network device receives the NLOS/LOS identification information and the measurement value from the receiving end device, and positions the target terminal in accordance with the NLOS/LOS identification information and the measurement value. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

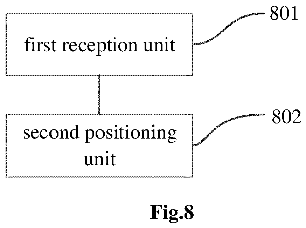

As shown in Fig. 8, the present disclosure further provides in some embodiments a terminal positioning device, which includes: a first reception unit 801 configured to receive NLOS/LOS identification information and a measurement value transmitted by a receiving end device; and a second positioning unit 802 configured to position a target terminal in accordance with the NLOS/LOS identification information and the measurement value.

Optionally, the NLOS/LOS identification information is used to represent a reliability level of a link between the receiving end device and a transmitting end device, or a reliability level of a measurement value corresponding to the link.

Optionally, the second positioning unit 802 is specifically configured to: determine, in accordance with the NLOS/LOS identification information, top N access network devices in a descending order of the measurement values, N≥3 and N being a positive integer; determine a measurement value corresponding to each access network device in the N access network devices; and create a measurement formula in accordance with the measurement value corresponding to each access network device, assign the NLOS/LOS identification information corresponding to each access network device as a weight value to the created measurement formula, and position the target terminal in accordance with the weighted measurement formula; or position the target terminal through a first predetermined positioning optimization algorithm in accordance with the measurement value corresponding to each access network device and the NLOS/LOS identification information corresponding to each access network device.

Optionally, the second positioning unit 802 is specifically configured to: determine measurement values corresponding to M access network devices whose NLOS/LOS identification information is 1, M≥3 and M being a positive integer; and create a measurement formula in accordance with the measurement value corresponding to each access network device whose NLOS/LOS identification information is 1, and position the target terminal in accordance with the created measurement formula; or position the target terminal through a second predetermined positioning optimization algorithm in accordance with the measurement value corresponding to each access network device whose NLOS/LOS identification information is 1.

According to the embodiments of the present disclosure, the terminal positioning device receives the NLOS/LOS identification information and the measurement value from the receiving end device, and positions the target terminal in accordance with the NLOS/LOS identification information and the measurement value. As a result, a positioning calculation end obtains the reliability level of each measurement value in accordance with the NLOS/LOS identification information, so as to select the measurement value with a high reliability level for the position calculation, thereby to improve the positioning accuracy of the terminal and meet the requirement on the positioning accuracy.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) or a processor to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, the device in the embodiments of the present disclosure is used to implement the above-mentioned method with a same technical effect, which will not be further particularly defined herein.

The present disclosure further provides in some embodiments a processor-readable storage medium storing therein a program instruction. The program instruction is executed by a processor, so as to: receive through the transceiver NLOS/LOS identification information and a measurement value transmitted by a receiving end device; and position a target terminal in accordance with the NLOS/LOS identification information and the measurement value.

The program instruction is executed by the processor so as to implement the above-mentioned method for the core network device in Fig. 2, which will not be further particularly defined herein.

Schemes in the embodiments of the present disclosure may be applied to various systems, especially a 5th-Generation (5G) mobile communication technology system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be further particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be further particularly defined herein. In some network structures, the network device includes a Centralized Unit (CU) and a Distributed Unit (DU), which may be geographically separated from each other.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, Compact Disc-Read Only Memory (CD-ROM) and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be noted that a person skilled in the art can make various changes and modifications to the present application without departing from the spirit and scope of the present application. In this way, if these changes and modifications of the present application fall within the scope of the claims of the present application and their equivalent technologies, the present application is also intended to include these changes and modifications.

**Claims**

1. A terminal positioning method, comprising:

   obtaining, by a receiving end device, first reference signal configuration information and a first reference signal corresponding to the first reference signal configuration information;
   obtaining, by the receiving end device, Non Line of Sight (NLOS)/Line of Sight (LOS) identification information and a measurement value, the NLOS/LOS identification information being obtained in accordance with the first reference signal configuration information and the first reference signal corresponding to the first reference signal configuration information; and
   transmitting, by the receiving end device, the NLOS/LOS identification information and the measurement value to a core network device, the measurement value and the NLOS/LOS identification information being used by the core network device to position a target terminal; or positioning, by the receiving end device, the target terminal in accordance with the NLOS/LOS identification information and the measurement value.

2. The terminal positioning method according to claim 1, wherein the NLOS/LOS identification information is used to indicate a reliability level of a link between the receiving end device and a transmitting end device, or a reliability level of a measurement value corresponding to the link.

3. The terminal positioning method according to claim 1, wherein the obtaining, by the receiving end device, the NLOS/LOS identification information comprises:

   obtaining a function value of a target metric parameter in accordance with the first reference signal configuration information and the first reference signal; and
   generating the NLOS/LOS identification information in accordance with the function value of the target metric parameter,

wherein the target metric parameter comprises at least one of a time-domain metric parameter, a frequency-domain metric parameter, or a space-domain metric parameter.

4. The terminal positioning method according to claim 3, wherein the obtaining the function value of the time-domain metric parameter in accordance with the first reference signal configuration information and the first reference signal comprises:

obtaining a time-domain Channel Impulse Response (CIR) in accordance with the first reference signal configuration information and the first reference signal;

obtaining a Rice factor of each symbol between different antennae of the receiving end device and the transmitting end device in accordance with the CIR; and

performing first predetermined function operation on the Rice factor of each symbol between the different antennae, to obtain a function value of a time-domain Rice factor.

5. The terminal positioning method according to claim 3, wherein the obtaining the function value of the frequency-domain metric parameter in accordance with the first reference signal configuration information and the first reference signal comprises:

obtaining a time-domain CIR and a Channel Frequency Response (CFR) in accordance with the first reference signal configuration information and the first reference signal;

performing delay estimation in accordance with the first reference signal configuration information and the first reference signal, to obtain a delay estimated value; and

processing the CIR in a first predetermined mode in accordance with the delay estimated value to obtain a first CIR, performing power normalization on the first CIR, performing time-frequency transformation on the normalized first CIR to obtain a variance between subcarriers in CFRs of the symbols between different antennae of the receiving end device and the transmitting end device, and performing second predetermined function operation on the variance to obtain a function value of a frequency-domain variance; or

processing the CFR in a second predetermined mode in accordance with the delay estimated value to obtain a processed CFR, performing power normalization on the processed CFR to obtain a variance between subcarriers in CFRs of the symbols between different antennae of the receiving end device and the transmitting end device, and performing third predetermined function operation on the variance to obtain a function value of a frequency-domain variance.

6. The terminal positioning method according to claim 3, wherein the obtaining the function value of the space-domain metric parameter in accordance with the first reference signal configuration information and the first reference signal comprises:

obtaining CIRs or CFRs between different antennae of the receiving end device and the transmitting end device in accordance with the first reference signal configuration information and the first reference signal; and

performing consistency calculation on the CIRs or CFRs between different antennae to obtain a space-domain consistency factor.

7. The terminal positioning method according to claim 3, wherein the generating the NLOS/LOS identification information in accordance with the function value of the target metric parameter comprises:

performing normalization on the function value of the target metric parameter to obtain a target value, the function value of the target metric parameter comprising a function value of a target metric parameter corresponding to each access network device or a function value of a target metric parameter corresponding to the measurement value; and

performing fourth predetermined function operation in accordance with the target value, to generate the NLOS/LOS identification information.

8. The terminal positioning method according to claim 3, wherein the generating the NLOS/LOS identification information in accordance with the function value of the target metric parameter comprises:

in the case that the function value of the target metric parameter is greater than a predetermined threshold, determining that the corresponding NLOS/LOS identification information is 1, and in the case that the function value of the target metric parameter is smaller than or equal to the predetermined threshold, determining that the NLOS/LOS identification information corresponding to each access network device or the measurement value is 0; or

ranking the function values of the target metric parameters in a predetermined order, setting the NLOS/LOS identification information corresponding to the measurement value or the access network device which meets a predetermined condition as 1, and setting the NLOS/LOS identification information corresponding to the measurement value or the access network device which does not meet the predetermined condition as 0.

9. A terminal positioning method, comprising:

   receiving, by a core network device, NLOS/LOS identification information and a measurement value transmitted by a receiving end device; and
   positioning, by the core network device, a target terminal in accordance with the NLOS/LOS identification information and the measurement value.

10. The terminal positioning method according to claim 9, wherein the NLOS/LOS identification information is used to represent a reliability level of a link between the receiving end device and a transmitting end device, or a reliability level of a measurement value corresponding to the link.

11. The terminal positioning method according to claim 9, wherein the positioning the target terminal in accordance with the NLOS/LOS identification information and the measurement value comprises:

   determining, in accordance with the NLOS/LOS identification information, top N access network devices in a descending order of the measurement values, N≥3 and N being a positive integer;
   determining a measurement value corresponding to each access network device in the N access network devices; and
   creating a measurement formula in accordance with the measurement value corresponding to each access network device, assigning the NLOS/LOS identification information corresponding to each access network device as a weight value to the created measurement formula, and positioning the target terminal in accordance with the weighted measurement formula; or
   positioning the target terminal through a first predetermined positioning optimization algorithm in accordance with the measurement value corresponding to each access network device and the NLOS/LOS identification information corresponding to each access network device.

12. The terminal positioning method according to claim 9, wherein the positioning the target terminal in accordance with the NLOS/LOS identification information and the measurement value comprises:

   determining measurement values corresponding to M access network devices whose NLOS/LOS identification information is 1, M≥3 and M being a positive integer; and
   creating a measurement formula in accordance with the measurement value corresponding to each access network device whose NLOS/LOS identification information is 1, and positioning the target terminal in accordance with the created measurement formula; or
   positioning the target terminal through a second predetermined positioning optimization algorithm in accordance with the measurement value corresponding to each access network device whose NLOS/LOS identification information is 1.

13. A receiving end device, comprising a memory, a transceiver and a processor, wherein the memory is configured to store therein a computer program, and the transceiver is configured to transmit and receive data under the control of the processor,
   wherein the processor is configured to read the computer program in the memory to:

   obtain first reference signal configuration information and a first reference signal corresponding to the first reference signal configuration information;
   obtain NLOS/LOS identification information and a measurement value, the NLOS/LOS identification information being obtained in accordance with the first reference signal configuration information and the first reference signal corresponding to the first reference signal configuration information; and
   transmit the NLOS/LOS identification information and the measurement value to a core network device, the measurement value and the NLOS/LOS identification information being used by the core network device to position a target terminal; or position the target terminal in accordance with the NLOS/LOS identification information and the measurement value.

14. The receiving end device according to claim 13, wherein the NLOS/LOS identification information is used to represent a reliability level of a link between the receiving end device and a transmitting end device, or a reliability level of a measurement value corresponding to the link.

15. The receiving end device according to claim 13, wherein the processor is configured to read the computer program in the memory to:

obtain a function value of a target metric parameter in accordance with the first reference signal configuration information and the first reference signal; and
generate the NLOS/LOS identification information in accordance with the function value of the target metric parameter,
wherein the target metric parameter comprises at least one of a time-domain metric parameter, a frequency-domain metric parameter, or a space-domain metric parameter.

16. The receiving end device according to claim 15, wherein the processor is configured to read the computer program in the memory to:

obtain a time-domain CIR in accordance with the first reference signal configuration information and the first reference signal;
obtain a Rice factor of each symbol between different antennae of the receiving end device and the transmitting end device in accordance with the CIR; and
perform first predetermined function operation on the Rice factor of each symbol between the different antennae, to obtain a function value of a time-domain Rice factor.

17. The receiving end device according to claim 15, wherein the processor is configured to read the computer program in the memory to:

obtain a time-domain CIR and a CFR in accordance with the first reference signal configuration information and the first reference signal;
perform delay estimation in accordance with the first reference signal configuration information and the first reference signal, to obtain a delay estimated value; and
process the CIR in a first predetermined mode in accordance with the delay estimated value to obtain a first CIR, performing power normalization on the first CIR, perform time-frequency transformation on the normalized first CIR to obtain a variance between subcarriers in CFRs of the symbols between different antennae of the receiving end device and the transmitting end device, and perform second predetermined function operation on the variance to obtain a function value of a frequency-domain variance; or
process the CFR in a second predetermined mode in accordance with the delay estimated value to obtain a processed CFR, perform power normalization on the processed CFR to obtain a variance between subcarriers in CFRs of the symbols between different antennae of the receiving end device and the transmitting end device, and perform third predetermined function operation on the variance to obtain a function value of a frequency-domain variance.

18. The receiving end device according to claim 15, wherein the processor is configured to read the computer program in the memory to:

obtain CIRs or CFRs between different antennae of the receiving end device and the transmitting end device in accordance with the first reference signal configuration information and the first reference signal; and
perform consistency calculation on the CIRs or CFRs between different antennae to obtain a space-domain consistency factor.

19. The receiving end device according to claim 15, wherein the processor is configured to read the computer program in the memory to:

perform normalization on the function value of the target metric parameter to obtain a target value, the function value of the target metric parameter comprising a function value of a target metric parameter corresponding to each access network device or a function value of a target metric parameter corresponding to the measurement value; and

perform fourth predetermined function operation in accordance with the target value, to generate the NLOS/LOS identification information.

20. The receiving end device according to claim 15, wherein the processor is configured to read the computer program in the memory to:

in the case that the function value of the target metric parameter is greater than a predetermined threshold, determine that the corresponding NLOS/LOS identification information is 1, and in the case that the function value of the target metric parameter is smaller than or equal to the predetermined threshold, determine that the NLOS/LOS identification information corresponding to each access network device or the measurement value is 0; or

rank the function values of the target metric parameters in a predetermined order, set the NLOS/LOS identification information corresponding to the measurement value or the access network device which meets a predetermined condition as 1, and set the NLOS/LOS identification information corresponding to the measurement value or the access network device which does not meet the predetermined condition as 0.

21. A terminal positioning device, comprising:

a first obtaining unit configured to obtain first reference signal configuration information and a first reference signal corresponding to the first reference signal configuration information;

a second obtaining unit configured to obtain NLOS/LOS identification information and a measurement value, the NLOS/LOS identification information being obtained in accordance with the first reference signal configuration information and the first reference signal corresponding to the first reference signal configuration information; and

a first transmission unit configured to transmit the NLOS/LOS identification information and the measurement value to a core network device, the measurement value and the NLOS/LOS identification information being used by the core network device to position a target terminal, or

a first positioning unit configured to position the target terminal in accordance with the NLOS/LOS identification information and the measurement value.

22. A core network device, comprising a memory, a transceiver and a processor, wherein the memory is configured to store therein a computer program, and the transceiver is configured to transmit and receive data under the control of the processor,

wherein the processor is configured to read the computer program in the memory to:

receive, through the transceiver, NLOS/LOS identification information and a measurement value transmitted by a receiving end device; and

position a target terminal in accordance with the NLOS/LOS identification information and the measurement value.

23. The core network device according to claim 22, wherein the NLOS/LOS identification information is used to represent a reliability level of a link between the receiving end device and a transmitting end device, or a reliability level of a measurement value corresponding to the link.

24. The core network device according to claim 22, wherein the processor is configured to read the computer program in the memory to:

determine, in accordance with the NLOS/LOS identification information, top N access network devices in a descending order of the measurement values, $N \geq 3$ and N being a positive integer;

determine a measurement value corresponding to each access network device in the N access network devices; and

create a measurement formula in accordance with the measurement value corresponding to each access network device, assign the NLOS/LOS identification information corresponding to each access network device as a weight value to the created measurement formula, and position the target terminal in accordance with the weighted measurement formula; or

position the target terminal through a first predetermined positioning optimization algorithm in accordance with the measurement value corresponding to each access network device and the NLOS/LOS identification information corresponding to each access network device.

25. The core network device according to claim 22, wherein the processor is configured to read the computer program in the memory to:

determine measurement values corresponding to M access network devices whose NLOS/LOS identification information is 1, M≥3 and M being a positive integer; and

create a measurement formula in accordance with the measurement value corresponding to each access network device whose NLOS/LOS identification information is 1, and position the target terminal in accordance with the created measurement formula; or

position the target terminal through a second predetermined positioning optimization algorithm in accordance with the measurement value corresponding to each access network device whose NLOS/LOS identification information is 1.

26. A terminal positioning device, comprising:

a first reception unit configured to receive NLOS/LOS identification information and a measurement value transmitted by a receiving end device; and

a second positioning unit configured to position a target terminal in accordance with the NLOS/LOS identification information and the measurement value.

27. A processor-readable storage medium storing therein a computer program, wherein the computer program is used to be executed by a processor, to implement the terminal positioning method according to any one of claims 1 to 8, or the terminal positioning method according to any one of claims 9 to 12.

start

obtaining, by a receiving end device, first reference signal configuration information and a first reference signal corresponding to the first reference signal configuration information ⟋ 101

obtaining, by the receiving end device, NLOS/LOS identification information and a measurement value, the NLOS/LOS identification information being obtained in accordance with the first reference signal configuration information and the first reference signal ⟋ 102

transmitting, by the receiving end device, the NLOS/LOS identification information and the measurement value to a core network device, the measurement value and the NLOS/LOS identification information being used by the core network device to position a target terminal; or positioning, by the receiving end device, the target terminal in accordance with the NLOS/LOS identification information and the measurement value ⟋ 103

end

**Fig.1**

start

receiving, by a core network device, NLOS/LOS identification information and a measurement value transmitted by a receiving end device — 201

positioning, by the core network device, a target terminal in accordance with the NLOS/LOS identification information and the measurement value — 202

end

**Fig.2**

| | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 1 | 0.5336 | 0.0011 | 1.0704e-04 | 0.0470 | 1 | 0.1490 | 6.2018e-05 | 0.0018 | 0.1541 | 0.0068 | 0.0013 | 6.0729e-04 | 1.0711e-04 | 0.0072 | 0.0124 | 1.8420e-04 | 0.0043 | 0.0020 |
| 2 | 5 | 1 | 9 | 6 | 4 | 15 | 14 | 10 | 17 | 18 | 8 | 11 | 2 | 12 | 16 | 13 | 3 | 7 |

**Fig.3**

| | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 1 | 1 | 0.0352 | 0.0339 | 0.0453 | 0.2018 | 0.1003 | 0.0325 | 0.0359 | 0.0825 | 0.0326 | 0.0347 | 0.0351 | 0.0429 | 0.0336 | 0.0335 | 0.0340 | 0.0343 | 0.0340 |
| 2 | 1 | 5 | 6 | 9 | 4 | 13 | 8 | 2 | 12 | 11 | 17 | 16 | 18 | 3 | 14 | 15 | 10 | 7 |

**Fig.4**

processor ~510

520

memory

bus interface ~500

transceiver

~530

user interface

**Fig.5**

first obtaining unit ~601

second obtaining unit ~602

first transmission unit ~603

first positioning unit ~604

**Fig.6**

processor ~710

720

memory

bus interface ~700

transceiver

**Fig.7**

first reception unit — 801

second positioning unit — 802

**Fig.8**

## INTERNATIONAL SEARCH REPORT

| | International application No. |
| --- | --- |
| | **PCT/CN2022/083314** |

| A. | CLASSIFICATION OF SUBJECT MATTER |
| --- | --- |
| | H04W 64/00(2009.01)i |

According to International Patent Classification (IPC) or to both national classification and IPC

| B. | FIELDS SEARCHED |
| --- | --- |

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 视距, 非视距, 定位, 距离, 时域, 频域, 响应, LOS, NLOS, position+, locat+, distance, CIR, CFR

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | NOKIA et al. "Views on potential positioning enhancements" <br> *3GPP TSG RAN WG1 #103-e R1-2008301*, 02 November 2020 (2020-11-02), <br> section 2.3 | 1-27 |
| X | INTERDIGITAL INC. "Discussion on On-demand reference signals for positioning" <br> *3GPP RAN WG2 Meeting #112-e R2-2008887*, 02 November 2020 (2020-11-02), <br> section 2.1 | 1-27 |
| X | CN 109392089 A (HUAWEI TECHNOLOGIES CO., LTD.) 26 February 2019 (2019-02-26) <br> description, paragraphs [0065]-[0078] | 1-27 |
| A | WO 2019245234 A1 (LG ELECTRONICS INC.) 26 December 2019 (2019-12-26) <br> entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 June 2022** | **28 June 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/083314**

| Patent document cited in search report | | | Publication date (day/month/year) | Patent family member(s) | | | Publication date (day/month/year) |
|---|---|---|---|---|---|---|---|
| CN | 109392089 | A | 26 February 2019 | US | 2020178038 | A1 | 04 June 2020 |
| | | | | WO | 2019029555 | A1 | 14 February 2019 |
| | | | | EP | 3644663 | A1 | 29 April 2020 |
| WO | 2019245234 | A1 | 26 December 2019 | US | 2021266773 | A1 | 26 August 2021 |

**REFERENCES CITED IN THE DESCRIPTION**

**Patent documents cited in the description**

- CN 202110513670